# EUROPEAN PATENT SPECIFICATION

(11) **EP 3 515 657 B1**
(45) Date of publication and mention of the grant of the patent: **21.10.2020**
(21) Application number: 17777864.4
(22) Date of filing: 26.09.2017
(51) Int. Cl.: B23P 19/00, B23K 9/20, B21J 15/32, B25B 23/06

(54) **MAGAZINE ASSEMBLY FOR JOINING ELEMENTS AND METHOD FOR CONVEYING JOINING ELEMENTS WITHIN A MAGAZINE**
MAGAZINANORDNUNG FÜR VERBINDUNGSELEMENTE UND VERFAHREN ZUM FÖRDERN VON VERBINDUNGSELEMENTEN IN EINEM MAGAZIN
ENSEMBLE MAGASIN POUR ÉLÉMENTS D'ASSEMBLAGE ET PROCÉDÉ DE TRANSPORT D'ÉLÉMENTS D'ASSEMBLAGE À L'INTÉRIEUR D'UN MAGASIN

(30) Priority: 26.09.2016 DE 102016118106
(43) Date of publication of application: 31.07.2019
(73) Proprietor: Newfrey LLC, New Britain, CT 06053 (US)
(72) Inventor: SCHNEIDER, Michael, 35394 Gießen (DE)
(74) Representative: SBD IPAdmin
(86) International application number: PCT/EP2017/074404
(87) International publication number: WO 2018/055208

(56) References cited:
- EP-A1- 2 671 662
- JP-A- 2014 213 380
- US-A1- 2012 301 262

## Description

The present invention relates to a magazine assembly for temporarily receiving joining elements, having a housing that defines a longitudinal axis, within which a plurality of joining elements can be accommodated axially in sequence, and having a conveyor that is configured for conveying joining elements from a first axial end of the housing to an opposite second axial end of the housing.

The present invention furthermore relates to a method for conveying joining elements within a magazine assembly, wherein the joining elements are arranged in sequence in a housing of the magazine assembly.

Such a magazine assembly and such a method are known from US 2012/301262 A1.

Using joining elements to produce joining connections is known in the field of joining technology. Examples of joining elements include rivets, in particular self-piercing rivets, which are used to join two workpieces to one another. However, joining elements can also be components that are joined to a workpiece, as in so-called stud welding or stud bonding, for example.

Such joining processes are widely used in motor vehicle body construction. For example, self-piercing rivets are used for connecting body panels. Plastic or metal studs are attached (welded or glued, etc.) to body sections, wherein these joining elements then serve as anchors for other fastening tasks. For example, plastic clips, which are in turn used to secure lines or cable clusters on the body, can be mounted on studs protruding in relation to a panel.

For carrying out such joining processes, joining devices that are often mounted on robots are used in vehicle body construction. For carrying out joining processes with high cycle rates, the joining elements used in the joining processes are preferably automatically fed to the joining device. The standard techniques for doing this involve a stationary infeed mechanism, which receives the joining elements individually and then conveys them by means of compressed air via a supply hose to a joining head of the joining device. In the joining head, the joining element is then generally loaded into a holding mechanism and held in a suitable manner for the joining process.

However, the use of such a flexible supply hose on a robot-guided joining head is problematic in some respects. In particular the mobility of the robot may be restricted as a result. The interfering contour may be enlarged. Less than ideal routing can cause the supply hose to kink, which in turn can interfere with the conveying process. The generally necessary bend radii of the supply hose can lead to increased wear. In addition, infeeding fastening elements in this manner leads to high air consumption and long infeed times.

Securing a magazine on a robot-guided joining head is also a known technique for avoiding this problem. The magazine is configured for receiving a plurality of joining elements so that a corresponding plurality of joining processes can be carried out in succession. After the magazine is empty, the joining head can be moved by means of the robot to a loading station, at which the magazine is refilled.

In such magazines, the joining elements received therein are generally accommodated such that they are immediately adjacent to one another in an axial direction. Particularly in the case of joining elements that have a relatively large flange diameter to shank diameter ratio (in particular so-called wide-flange bolts), such a magazine solution is often impossible because the joining elements may tilt and cant in the magazine.

Document JP 2014/213380 A teaches the use of a mechanical valve structure for transferring joining elements accommodated in a magazine tube such that they are directly adjacent to one another into a guide passage. The mechanical valve structure can be formed by a conically converging clamp structure or by a locking element mounted for perpendicular displacement relative to a magazine axis.

Given this background, an object of the invention is to specify an improved magazine assembly for temporarily receiving joining elements as well as an improved method for conveying joining elements within a magazine assembly.

In the case of the aforesaid magazine assembly, this object is achieved in that, within the housing, a plurality of housing nests is formed, which are arranged in sequence along the longitudinal axis and which are each configured for receiving a joining element, wherein the conveyor is configured for conveying joining elements, i.e., a single joining element or several joining elements, in cycles from an infeed housing nest at the first axial end of the housing to a dispensing housing nest at the opposite second axial end of the housing.

Preferred embodiments of the magazine assembly are stated in the dependent claims.

This object is furthermore achieved by a method for conveying joining elements within a magazine assembly, in particular within a magazine assembly of the type according to the invention, wherein the joining elements are accommodated such that they are axially spaced apart from one another in housing nests arranged axially in sequence of a housing of the magazine assembly, wherein the joining elements are conveyed synchronously and in cycles, while maintaining their axial spacing, from a first axial end of the housing toward an opposite second axial end of the housing.

The magazine assembly according to the invention has on the one hand the advantages of a magazine that can be mounted on a joining head. These advantages include the fact that it is not necessary to route a supply hose to the joining head, thus perhaps giving rise to a smaller interfering contour for the joining head. Moreover, movements of the robot in a fifth axis and in a sixth axis are not restricted by a supply hose. This hose also cannot kink and interferences with the infeed can thus be avoided. Moreover, less blown air is required for infeeding the joining element, and the infeed time of a joining element can be shortened because the magazine assembly can be attached to a joining head. Shorter cycle times are thus achievable.

In general it is also conceivable to attach two or more of such magazine assemblies to a joining head, for example in order to accommodate different joining elements. Such magazine assemblies can also be arranged as in a revolver.

In addition, the magazine arrangement is also suitable for joining elements with a large diameter and/or for joining elements in which the ratio of a flange diameter to a shank diameter is large. The joining elements can be held stably in terms of their position, particularly in the case of cyclical or nestwise conveying, through the measure of forming a plurality of housing nests that are each configured for receiving a joining element.

The housing nests are in particular arranged integrally with the housing. The joining elements are preferably held within the housing in the housing nests in such a way that they are distanced from a tube-shaped housing wall. The housing nests can be arranged axially in sequence within a tube-shaped or cylindrical housing.

The housing nests are each preferably configured such that a joining element held therein can be conveyed further in a conveying direction, but cannot be moved backwards against the conveying direction. This fundamental principle can be applied for embodying a cyclically operating conveyor along these lines.

Thus it is preferably also possible to convey only one joining element or any number of joining elements, optionally also with empty nests in-between, in cycles through the magazine assembly. In other words the conveyer mechanism is designed such that with each cycle, a joining element is transferred from one housing nest to the next housing nest in sequence in a conveying direction. This preferably takes place synchronously for all housing nests or rather joining elements in the housing nests such that it is inconsequential whether one joining element or a plurality of joining elements is being conveyed through the magazine assembly. The joining elements are each guided and held independently of one another during the cyclical conveying.

The object is thus fully achieved.

According to a particularly preferred embodiment, the housing nests are configured in such a way that joining elements are spaced apart from one another in axially adjacent housing nests.

In other words, the joining elements are arranged within the magazine assembly in such a way that they do not touch each other. Preference is given to the joining elements also not touching each other during the cyclical conveying of joining elements to a dispensing housing nest.

According to another preferred embodiment the conveyor has a plurality of conveyor nests which are arranged in sequence along the longitudinal axis, which are each configured for receiving a joining element, and which are jointly displaceable in a longitudinal direction between a first axial position and a second axial position, wherein the conveyor nests, in the first axial position, are aligned axially with a first group of housing nests and wherein the conveyor nests, in the second axial position, are aligned axially with a second group of housing nests, which is offset by an axial housing nest length in relation to the first group.

Consequently, preference is given to the conveyor nests being axially displaceable between the first and the second axial positions relative to the housing nests. The first group of housing nests and the second group of housing nests are preferably identical, with the exception of respective end housing nests.

In a first axial position, the conveyor nests are preferably axially aligned with a first group of housing nests. In the second axial position, the conveyor nests are preferably displaced in relation to the housing nests by a housing nest length into the second axial position.

When they are in axial alignment with one another, the housing nests and the conveyor nests are preferably configured as interspersed (or encapsulated) in a peripheral direction.

In an embodiment, the conveyor nest is furthermore configured such that it is capable of holding a joining element held therein in a position-stable manner. Furthermore, preference is given to the conveyor nests each being configured such that while a joining element accommodated therein can be moved further in a conveying direction, a movement of the joining element out of the conveyor nest against the conveying direction is impossible.

Preference is given to the housing nests and the conveyor nests each being embodied as mechanical valves or mechanical check valves for the joining elements.

According to another preferred embodiment, the housing nests and/or a plurality of conveyor nests each have a number of nest segments that are distributed around the periphery of the housing.

The nest segments of the housing nests are preferably spaced apart from one another in the peripheral direction.

The nest segments are preferably spaced apart from one another in the peripheral direction at an angle greater than 30°, preferably at an angle greater than 45°, and in particular at an angle equal to 60°.

Provided that the housing nests and the conveyor nests are interspersed in a peripheral direction, then the preferred design is such that in the peripheral direction, a nest segment of a housing nest follows a nest segment of a conveyor nest, a nest segment of a housing nest in turn follows the nest segment of the conveyor nest, and so forth.

Preference is given to each housing nest and/or to each conveyor nest having exactly three nest segments, which are offset relative to one another in a peripheral direction and which jointly form a 360° angle.

It is particularly preferable if the nest segments of the housing nests and the nest segments of the conveyor nests are identical parts.

This measure enables an economical embodiment of the magazine assembly.

However, it is preferable if, as an exception, the dispensing housing nest is embodied such that an axial movement in a conveying direction out of the dispensing nest is possible with little energy expenditure, for example with blown air.

The nest segments of the dispensing housing nest, which is generally integral with the housing, can consequently be configured differently from the nest segments of the other nests in the magazine assembly.

According to another overall preferred embodiment, the nest segments of the conveyor nests are axially coupled and jointly displaceable between the first axial position and the second axial position by means of a conveyor drive.

As a consequence, the nest segments of the conveyor nests are each preferably displaced by an axial nest length between the first axial position and the second axial position in each cycle. Because the conveyor nests also preferably function as mechanical valves, a joining element held in a first housing nest remains in said first housing nest, even if a conveyor nest that was previously axially aligned therewith is moved backwards against the conveying direction in order to align said conveyor nest axially with a second housing nest situated upstream in the conveying direction. In the next conveying step in the conveying direction, the same conveyor nest is moved again in the opposing direction, i.e., in the conveying direction, until it is once again axially aligned with the first housing nest, with which it was originally aligned. In this process, a joining element picked up from the upstream second housing nest is then received in the first housing nest situated downstream in relation thereto. In this conveying step, the joining element that was previously located in the first housing nest is conveyed into a downstream-situated third housing nest. This happens simultaneously for all housing nests such that either a single joining element or several joining elements can be conveyed in cycles from an infeed housing nest to a dispensing housing nest.

In an embodiment, the housing nests and/or a plurality of conveyor nests are each configured in such a way that a joining element is held therein in a tilt-proof manner.

In other words, the housing nests are embodied such that the joining elements are always held therein in a position-stable manner and axially secured against a movement contrary to the conveying direction. Particularly in the case of joining elements with a large diameter or with a large flange diameter to shank diameter ratio (wide-flange bolts), it is thus possible to ensure that the joining elements do not tilt during the conveying process, thus preventing the magazine from becoming jammed.

According to another preferred embodiment, the joining elements have a flange section, wherein the housing nests and/or a plurality of conveyor nests each have a clamping mechanism that engages in a radially elastic manner on the flange section and/or a support mechanism that engages on an upper side of the flange section.

The clamping mechanisms each preferably engage on an outer periphery of the flange section and are designed to hold a joining element axially by means of radial clamping.

The support mechanisms are preferably embodied in such a way that they hold a joining element held in a nest in an interlocking manner in an axial direction (contrary to the conveying direction) so that the joining element held in a nest can be borne by the support mechanism in a tilt-proof manner. In this manner it is furthermore possible to achieve an axial securing against retraction. In the case of the conveyor nests, the support mechanisms are furthermore used to press a joining element held in an upstream-situated housing nest in an axial direction during the cyclic conveying step towards the downstream-situated housing nest, thereby bringing about the cyclical conveying between housing nests.

The clamping mechanism can optionally be configured with a holding mechanism that engages on an underside of the flange section.

The clamping mechanisms and/or the support mechanisms are each preferably embodied by the respective nest segments. In the preferred design in which the housing nests and the conveyor nests each have exactly three nest segments, a defined position (three-point bearing) of the joining elements is achievable.

According to another preferred embodiment, a conveyor drive is configured for moving a plurality of conveyor nests relative to a plurality of housing nests.

As described, a cyclical conveying is thus achievable.

It is preferable herein if a travel distance between the first axial position and the second axial position is greater than an axial length of a joining element.

It is thus possible to ensure that the joining elements are axially spaced apart from one another within the magazine assembly. The axial separation distance thus corresponds to a difference between the travel distance and the axial length of a joining element.

It is furthermore advantageous overall if the housing nests and or a plurality of conveyor nests each have a plurality of radial locking tabs that are a radially distributed around the periphery and that extend essentially in an axial direction.

Preference is thus given to each nest segment having a corresponding radial locking tab. Preference is furthermore given to the radial locking tabs extending in an axial direction, starting from a segment base, into an axially-downstream adjacent nest.

In an analogous manner, preference is given to the housing nests and/or a plurality of conveyor nests each having a plurality of support bars that are distributed around the periphery and that extend essentially in an axial direction.

The support bars are preferably also capable of being deflected radially outwards in order to allow a joining element to pass through a nest in an axial direction.

However, the support bars project further inward in a radial direction when in an elastically relaxed state. When a joining element is received in a nest, after a radial outward deflection the support bars spring back in a radially inward direction until they are able to engage on an upper side of a flange section.

The support bars are preferably always provided on each nest segment. The support bars preferably extend in an axial direction, starting from a segment base of a nest segment, in an axial direction into a downstream-adjacent nest.

Particular preference is given to the radial locking tabs being slotted in a longitudinal direction, wherein the support rods are each arranged in a longitudinal slot of a radial locking tab.

A compact construction is thus achievable.

According to another overall preferred embodiment, at least some of the radial locking tabs of the housing nests and/or of the conveyor nests have radially inward-projecting retaining lugs on their axial ends.

When a joining element is received in a nest, the radial locking tabs are moved radially outwards until a flange section, for example, comes in abutment in an axial direction against such retaining tabs. In this position, the support rods, for example, spring back in a radially elastic manner and then rest on an upper side of a flange section of a joining element. If a conveyor nest is then moved in an axial direction, it presses the joining element out of a housing nest further along in the conveying direction, wherein the radial locking tabs are radially widened and the flange section is moved past the retaining lugs until it comes in abutment against the retaining lugs of a downstream-situated housing nest.

In an analogous manner, the retaining lugs are able to move radially outward from the conveyor nests when a conveyor nest is moved contrary to the conveying direction.

As stated, the conveyor nests and the housing nests are preferably arranged interspersed in a peripheral direction and are each preferably embodied by identical parts (nest segments). An exception to this is the dispensing housing nest, which is preferably likewise equipped with radial locking tabs, but without retaining lugs provided on their ends.

A joining element transferred into the dispensing housing nest can thus be further transported in an expedient manner, for example by means of blown air.

Accordingly, preference is given to the dispensing housing nest being hooked up to a compressed air connection.

Preferably, the conveyor has a plurality of conveyor nests, which are arranged in sequence along the longitudinal axis, which are each configured for receiving a joining element, and which are jointly displaceable in a longitudinal direction between a first axial position and a second axial position, wherein the conveyor nests, in the first axial position, are axially aligned with a first group of housing nests and wherein the conveyor nests, in the second axial position, are axially aligned with a second group of housing nests, which is offset from the first group by an axial housing nest length.

Preferably, the plurality of conveyor nests each have a number of nest segments distributed around the periphery of the housing.

Preferably, the joining elements have a flange section, and a plurality of conveyor nests each have a locking mechanism that engages in a radially elastic manner on the flange section and/or a support mechanism that engages on an upper side of the flange section

Exemplary embodiments of the invention are depicted in the drawings and will be explained in more detail in the following description. Shown are:
- Fig. 1: a schematic depiction of a joining head, with a first embodiment of a magazine assembly according to the invention attached thereto;
- Fig. 2: a perspective view of another embodiment of a magazine assembly according to the invention;
- Fig. 3: a longitudinal sectional view of the magazine assembly of Fig. 2;
- Fig. 4: a view from above of the magazine assembly of Fig. 2;
- Fig. 5: a view of the magazine assembly comparable to that of Fig. 2 without a tube-like housing, wherein some nest segments have been omitted in order to show the interior of the magazine assembly;
- Fig. 6: a detailed view VI of Fig. 5;
- Fig. 7: a magnified longitudinal sectional view through the magazine assembly of Fig. 2;
- Fig. 8: a perspective depiction of a nest segment for housing nests and for conveyor nests; and
- Fig. 9: a depiction of a lower end of the magazine assembly of Fig. 2, with the end piece of the housing removed.

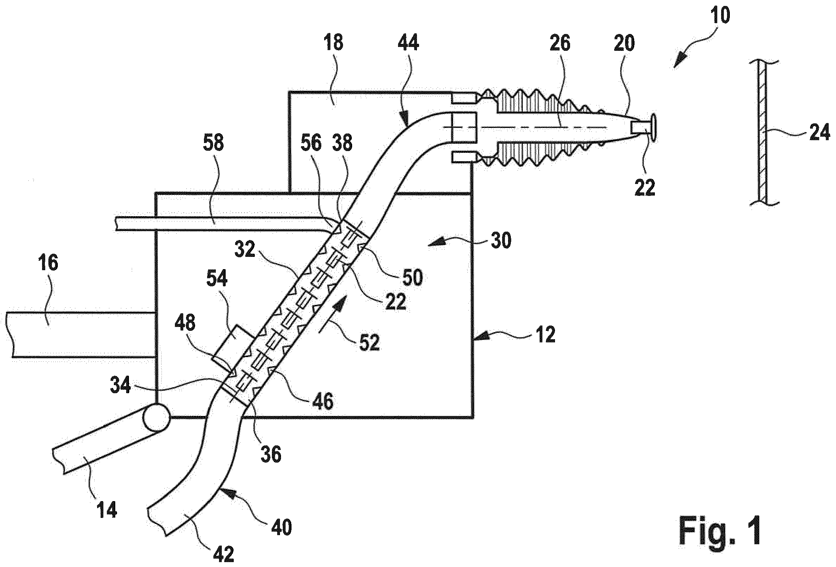

A joining device is depicted schematically and designated in general by 10 in Fig. 1.

The joining device 10 has a joining head 12, which is attached to a schematically indicated robot arm 14. The joining head 12 is connected to a power supply 16 by means of flexible cables. A carriage 18 is mounted for axial displacement on the joining head 12. A holding mechanism 20 for holding a joining element 22 is formed on the carriage 18. The joining device 10 is used to join a joining element 22 held in the holding mechanism 20 to a component 24 such as a vehicle body panel, for example. The joining takes place along a joining axis 26, which is aligned parallel to a displacement direction of the carriage 18 and coaxial to a longitudinal axis of the joining element 22.

The joining element 22, which is held in the holding mechanism 20, is preferably joined to the component 24 by means of joining process such as a stud welding process or a stud gluing (or bonding) process. The joining element 22 preferably has a flange section with a larger diameter and a shank section with a smaller diameter.

A magazine assembly 30 is attached to the joining head 12. The magazine assembly 30 has an elongate housing 32, which defines a longitudinal axis 34. The housing 32 has a first axial end 36 and a second axial end 38. The first axial end 36 is connected to an infeed mechanism 40. The infeed mechanism 40 is preferably a stationary mechanism, to which the joining head 12 is driven by means of the robot in order to fill the magazine assembly 30 at the infeed mechanism 40 with a plurality of joining elements 22. However, it is in general also conceivable to connect the first axial end 36 of the housing 32 to a supply hose 42, as schematically indicated in Fig. 1.

The second axial end 38 of the housing 32 is connected to a transfer mechanism 44, which is configured to transfer one joining element 22 in each case from the magazine assembly 30 into the holding mechanism 20.

A plurality of housing nests 46, in each of which a joining element 22 is accommodated, are formed in the magazine assembly 30. The housing nests are arranged in sequence along the longitudinal axis 34. The housing nests 46 are configured such that joining elements 22 in adjacent housing nests 46 are spaced apart from one another. The housing nests 46 are furthermore configured such that the joining elements 22 are always held therein in a position-stable manner, i.e., tilt-proof manner.

The housing nests 46 include an infeed housing nest 48, which is adjacent to the first axial end 36, and also a dispensing housing nest 50. The dispensing housing nest 50 is associated with the second axial end 38. A joining element 22, which is received in the dispensing housing nest 50, can be transferred by means of a transfer step into the transfer mechanism 44, in order to hold this joining element 22 in the holding mechanism 20 for a subsequent joining process.

The magazine assembly 30 is configured such that joining elements contained in the housing nests 46 are cyclically conveyed in a conveying direction 52 from the infeed housing nest 48 to the dispensing housing nest 50. Provision is made of a conveyor 54 suitable for this purpose.

The dispensing housing nest 50 is equipped with a compressed air connection 56 in the present case. A compressed air hose 58, by means of which compressed air is supplied for transferring a joining element 22 contained in the dispensing housing nest 50 toward the holding mechanism 20, can be connected via the compressed air connection 56.

During operation, the magazine assembly 30 is filled with joining elements by means of an infeed mechanism 40. A robot can then drive the joining head 12 from one joining position to the next, where a respective joining element is then joined onto each joining position. After each of such joining processes, the magazine assembly 30 is actuated in such a way that the joining elements contained therein are conveyed by one cycle or rather one housing nest further in the conveying direction 52 so that another joining element 22 enters the dispensing housing nest 50 in order to be loaded into the holding mechanism 20 for a subsequent joining process. When the magazine assembly 30 is almost or completely empty, the joining head 12 can be returned to a stationary infeed mechanism 40, where the magazine assembly 30 is refilled. As an alternative, this can also be effected via a supply hose 42 during the ongoing operation. However, the use of a supply hose is less preferable because the purpose of providing the magazine assembly 30 on the joining head 12 is to achieve independence from a supply hose 42.

However, the magazine assembly 30 also has the advantage that joining elements 22 supplied in the dispensing housing nest 50 near the holding mechanism 20 are each supplied in a position-stable manner, thus preventing jamming or the like from occurring during the transfer to the holding mechanism 20. This is particularly true when joining elements that have a large flange section diameter to shank diameter ratio are being joined.

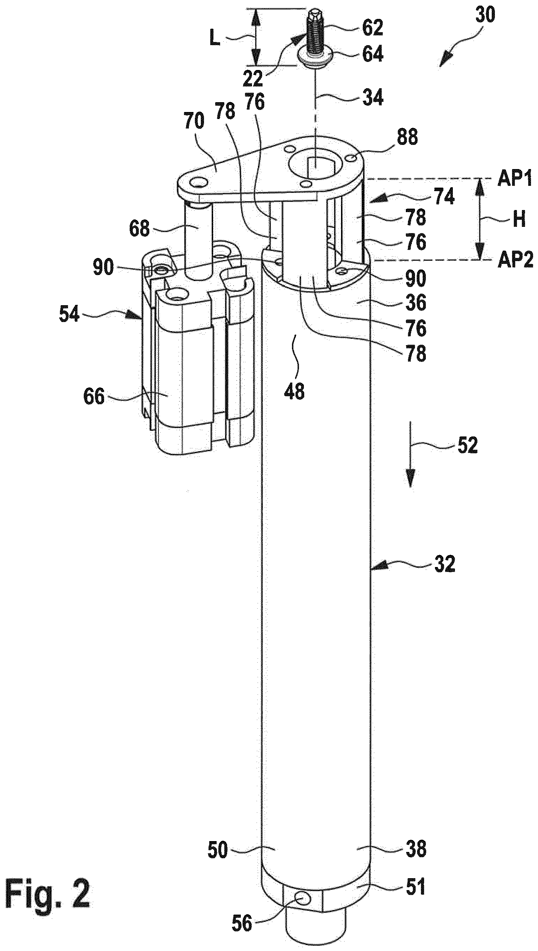

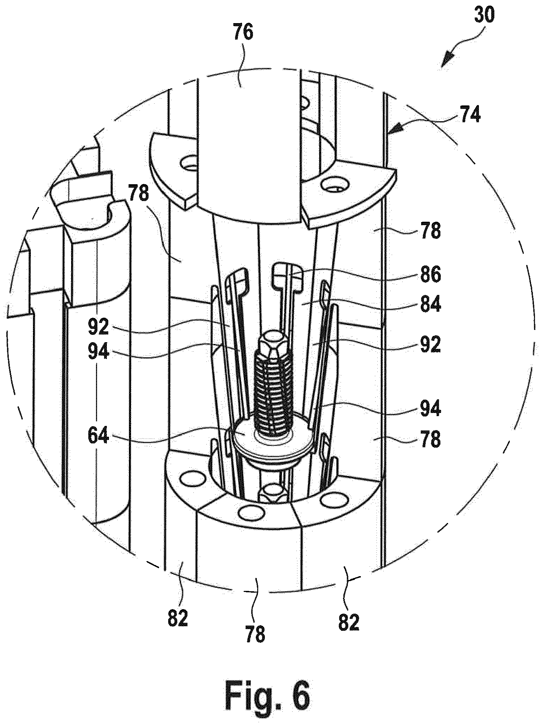

A preferred embodiment of a magazine assembly 30 for a joining device 10 is shown in Figures 2 through 9.

In terms of design and function, the magazine assembly 30 of Figures 2 through 9 generally corresponds to the magazine assembly 30 of Figure 1. The same elements are therefore designated with the same reference signs. Essentially only the differences will be explained in the following.

As shown in Fig. 2, the joining elements 22 each have, for example, a joining element shank 62 with a relatively small diameter and a joining element flange 64 with a relatively larger diameter.

It can furthermore be discerned in Fig. 2 that the magazine assembly 30 has a conveyor 54, which includes a conveyor drive 66. The conveyor drive 66 can be configured as, for example, a pneumatic cylinder, the longitudinal axis of which is arranged in parallel offset to the longitudinal axis 34 of the housing 32.

A drive shaft 68, which can be offset parallel to the longitudinal axis 34 by means of the conveyor drive 66, is connected to a drive lever 70, which extends in a radial direction from the drive shaft 68 in a direction over the first axial end 36 of the housing 32.

In Fig. 1 it is furthermore indicated that the housing 32 has, on the second axial end 38, a housing end piece 51 on which the compressed air connection 56 is formed.

In addition to the plurality of housing nests 46, the magazine assembly 30 has a plurality of conveyor nests 74, which can be moved by means of the conveyor drive 66 in an axial direction relative to the plurality of housing nests 46.

In this process, the conveyor nests 74 can be moved in a longitudinal direction between a first axial position AP1 and a second axial position AP2. A travel distance H of the conveyor drive 66 is defined by the axial positions AP1, AP2. The travel distance H is less than a length L of a joining element 22.

To execute a conveyor cycle, the conveyor nests 74 are shifted in an axial direction into the axial position AP1. In this state, for example, a joining element 22 can be transferred into the infeed housing nest 48. The plurality of conveyor nests 74 is then shifted in the conveying direction 52 toward the second axial position AP2. All joining elements contained in the magazine assembly 30, which are received in respective housing nests 46, are transferred into an housing nest 46 situated adjacently downstream in the conveying direction 52. For example, a joining element that was arranged in a housing nest adjacently upstream of the dispensing housing nest 50 can now be conveyed into the dispensing housing nest 50, from where the joining element can then be transferred to (i.e., loaded into) the holding mechanism.

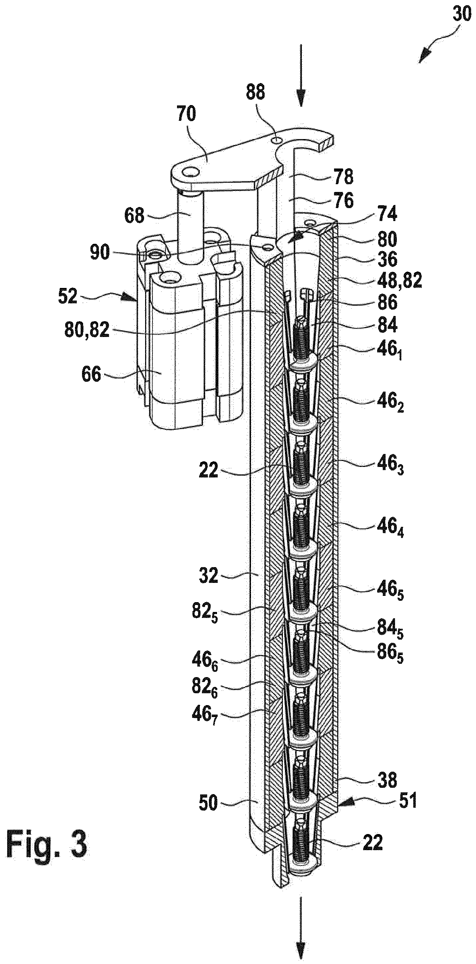

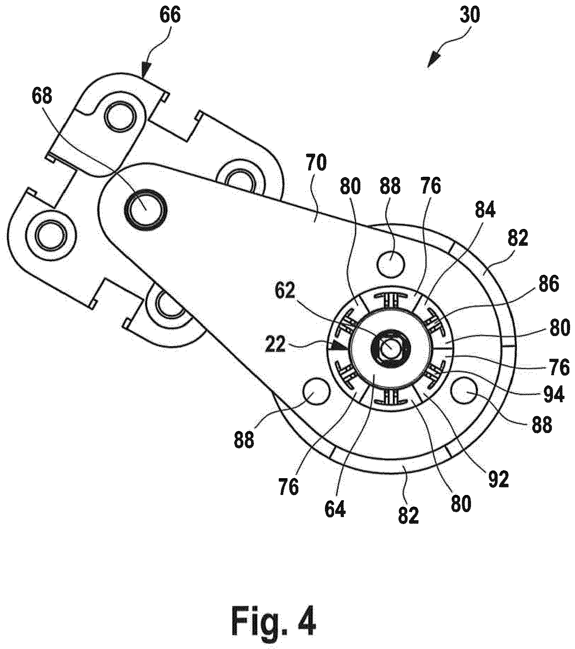

As indicated in Fig.2 and in the other figures, each conveyor nest 74 has a plurality of conveyor nest segments 76, which each include a conveyor nest segment base 78. The conveyor nest segments 76 each span 60° in a peripheral direction and are each spaced apart from one another by 60°, as is evident from Fig. 4 in particular. From Fig. 4 and Fig. 3 it is also evident that each housing nest 46 is formed by a plurality of housing nest segments 80, which each have a housing nest segment base 82.

The housing nest segment bases 82 each extends over 60° and are each spaced apart from one another by 60° (Fig. 4). Conveyor nest segment bases 78 are thus arranged between the housing nest segment bases 82 in each case. The housing nest segment bases 82 and the conveyor nest segment bases 78 jointly form a 360° ring shape within the hollow cylindrical housing 32.

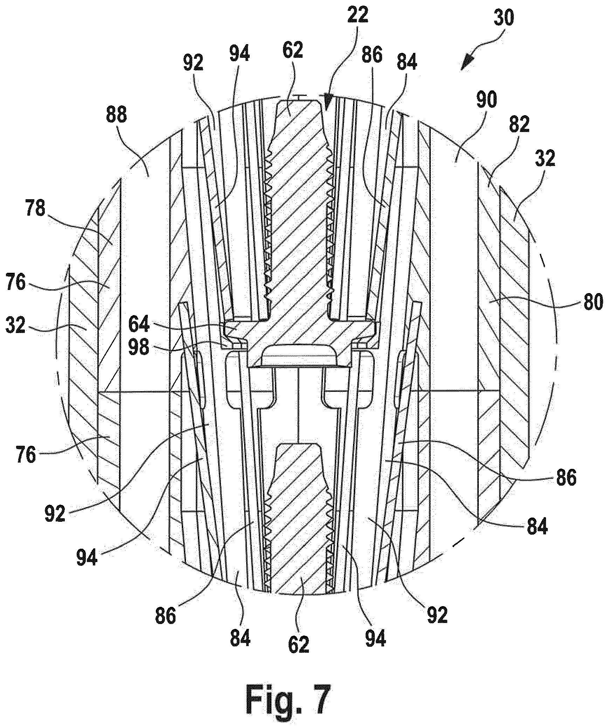

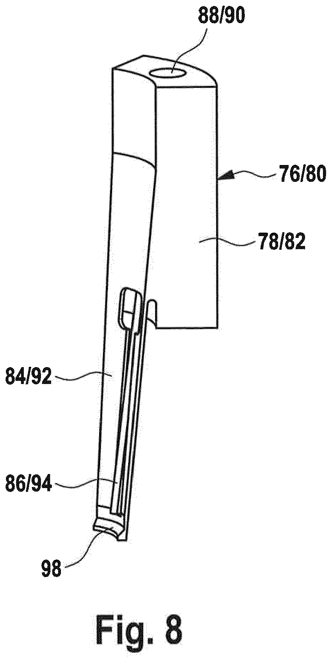

The housing nest segments 80 each have a radial locking tab 84 (in particular see Fig. 3, 5, 6, 7 and 8). The radial locking tabs 84 each extend, starting from an inner periphery of the housing nest segment base 82, in an axial direction into the interior space of an axially downstream adjacent housing nest 46. The radial locking tabs 84 are each equipped with a longitudinal slot. In each case a support bar 86 is connected to a housing nest segment base 82 and is essentially arranged within the longitudinal slot but extends in a radial direction further inward, as can be discerned in particular in Fig. 8 and Fig. 7.

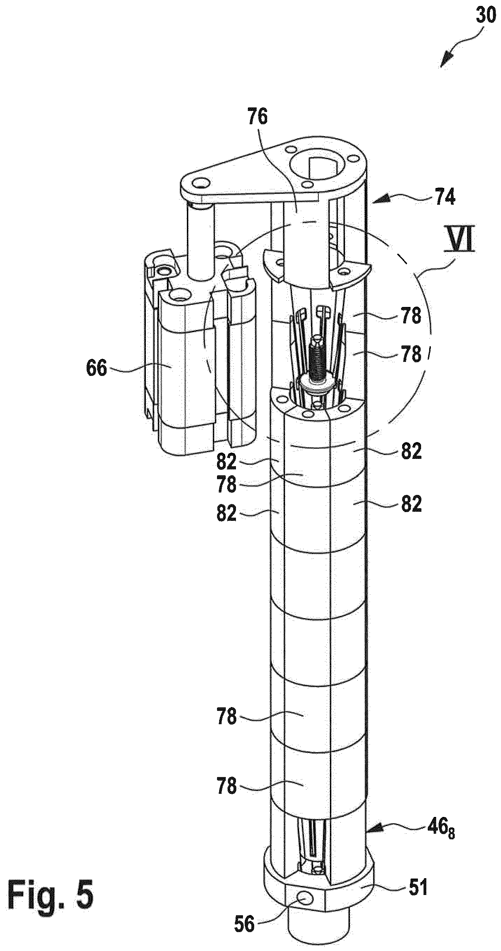

It can be ascertained in particular from Figures 5, 6 and 7 that a joining element 22 is held in a housing nest by the radial locking tabs 84 of the housing nest segments 80 pressing essentially radially outward against the joining element flange 64. The support bars 86 of this housing nest 46 furthermore rest on the upper side of the joining element flange 64. The position of the joining element 22 is thus stabilized, and this element is held in the respective housing nest in a tilt-proof manner.

As can be discerned in particular in Figures 2, 3, 4, the housing nest segment bases 82 of axially adjacent housing nests contact one another axially. The housing nest segment bases 82 lying axially over one another are furthermore each bolted to one another by housing segment screw connections 90 and are consequently integrally accommodated within the housing 32.

In an analogous manner, conveyor nest segment bases 78 lying axially over one another of the conveyor nests 74 are screwed (bolted) to one another in an axial direction, namely by means of respective conveyor segment screw connections 88, as can be ascertained in particular in Figures 2, 3, 4.

The conveyor segment screw connections 88 enable all of the conveyor nests to be moved in a longitudinal direction relative to the housing nests 46.

As can be ascertained in particular from Figures 7 and 8, each conveyor nest segment 76 also includes a radial locking tab 92 that extends in an axial direction from the respective conveyor nest segment base 78. The radial locking tabs 92 of the conveyor nest segments 76 likewise each have a longitudinal slot, within which is arranged a support bar 94 which, at its free end, extends further radially inward than the radial locking tab 92.

In the present case, the conveyor nest segments 76 and the housing nest segments 80 are actually configured as identical parts so that the magazine assembly 30 can be economically manufactured.

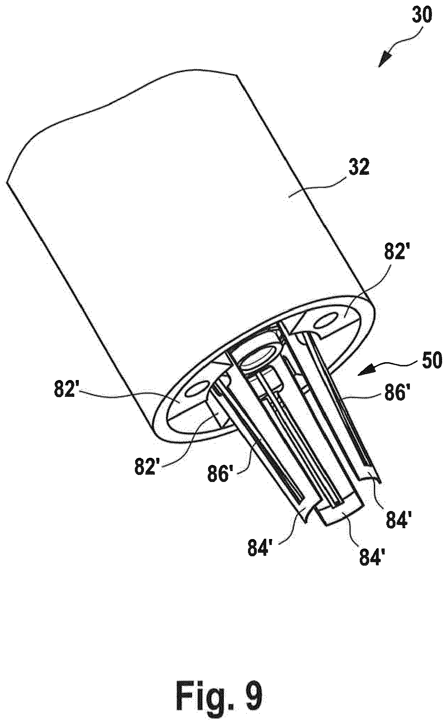

In Fig. 9 it can furthermore be discerned that the dispensing housing nest 50 likewise has a plurality of housing nest segment bases 82', from which radial locking tabs 84' and support bars 86' extend in each case. On their free ends, the radial locking tabs 84' do not have any radially inward-projecting retaining lugs such as those provided for the other nest segments (see Fig. 8).

In all nest segments, a joining element is further stabilized in terms of its position by the fact that such retaining lugs 98 interlockingly engage from below on the joining element flange 64 (also see Fig. 7). During the axial movement of the conveyor nests 74, the joining element flanges 64 are pressed out of the radial locking tabs in an axial direction, namely by means of the respective support bars.

In the case of the dispensing housing nest 50, a joining element is also radially clamped on an outer periphery of the joining element flange 64 by means of the radial locking tabs 84'. However, this clamping is considerably easier to overcome in an axial direction, for example by a compressed air blast that is applied via the compressed air connection 56 to the housing end piece 51 that is not depicted in Fig. 9 for the sake of clarity.

If a joining element is inserted in the infeed housing nest 48 during operation according to Fig. 5, starting from Fig. 5 the next conveying step takes place in the conveying direction 52, during which the conveyor nests 74 are moved in the conveying direction by the axial travel distance H into the second axial position AP2 (see Fig. 2).

In this process, the support bars 94 of the conveyor nests 74 press the joining element out of the infeed housing nest 48 into the axially adjacent housing nest 46₁ (see Fig. 3). The conveying element is then held in an axial direction by the support bars 86 of the housing nest 46₁. In a subsequent conveying step, the conveyor nests 74 are again moved against the conveying direction 52 toward the axial position AP1. In this process, the joining element held in the housing nest 46₁ is held axially by means of the support bars 86. Another joining element can then be transferred into the infeed housing nest 48.

In a subsequent conveying step, the joining element held in the infeed housing nest 48 and the joining element held in the underlying housing nest 46₁ are then moved in the conveying direction 52 into the next downstream housing nests 46 in each case.

In this process, the joining elements are moved, by means of the support bars 94 of the conveyor nests involved, out of the infeed housing nest 48 and the underlying housing nest 46₁ into the housing nest 46₁ or rather the underlying housing nest 46₂. All further conveying steps likewise take place in cycles and can be used for receiving further conveyor elements. However, it is also possible to cycle only one conveying element through the magazine assembly 30.

## Claims

1. A magazine assembly (30) for temporarily receiving joining elements (22), having
- a housing (32) defining a longitudinal axis (34), within which a plurality of joining elements (22) can be accommodated axially in sequence, and
- a conveyor (54), which is configured for conveying joining elements (22) from a first axial end (36) of the housing (32) to an opposite second axial end (38) of the housing,
**characterized in that**
a plurality of housing nests (46) is formed within the housing (32), which are arranged in sequence along the longitudinal axis (34) and which are each configured for receiving a joining element (22), wherein the conveyor (54) is configured for conveying a single joining element (22) or several joining elements (22) in cycles from an infeed housing nest (48) at the first axial end (36) of the housing (32) to a dispensing housing nest (50) at the opposite second axial end (38) of the housing (32).

2. The magazine assembly according to claim 1, **characterized in that** the housing nests (46) are configured such that joining elements (22) are spaced apart from one another in axially adjacent housing nests (46).

3. The magazine assembly according to claim 1 or 2, **characterized in that** the conveyor (54) has a plurality of conveyor nests (74), which are arranged in sequence along the longitudinal axis (34), which are each configured for receiving a joining element (22), and which are jointly displaceable in a longitudinal direction between a first axial position (AP1) and a second axial position (AP2), wherein the conveyor nests (74), in the first axial position (AP1), are axially aligned with a first group of housing nests (46) and wherein the conveyor nests (74), in the second axial position (AP2), are axially aligned with a second group of housing nests (46), which is offset from the first group (46) by an axial housing nest length (H).

4. The magazine assembly according to one of claims 1 - 3, **characterized in that** the housing nests (46) and/or a plurality of conveyor nests (74) each have a number of nest segments (80; 76) distributed around the periphery of the housing (32).

5. The magazine assembly according to claim 4, **characterized in that** the nest segment (80) of the housing nest (46) and the nest segment (76) of the conveyor nest (74) are identical parts.

6. The magazine assembly according to claim 4 or 5, **characterized in that** the nest segments (76) of the conveyor nests (74) are axially coupled and jointly displaceable between the first axial position (AP1) and the second axial position (AP2) by means of a conveyor drive (66).

7. The magazine assembly according to one of claims 1 - 6, **characterized in that** the housing nests (46) and/or a plurality of conveyor nests (74) are each configured such that a joining element (22) is held therein in a tilt-proof manner.

8. The magazine assembly according to one of claims 1 - 7, **characterized in that** the joining elements (22) have a flange section (64), wherein the housing nests (46) and/or a plurality of conveyor nests (74) each have a locking mechanism (84; 92) that engages in a radially elastic manner on the flange section (64) and/or a support mechanism (86; 94) that engages on an upper side of the flange section (64).

9. The magazine assembly according to one of claims 1 - 8, **characterized in that** a conveyor drive (66) is configured for moving a plurality of conveyor nests (74) relative to a plurality of housing nests (46).

10. The magazine assembly according to claim 9, **characterized in that** a travel distance (H) between the first axial position (AP1) and the second axial position (AP2) is greater than an axial length (L) of a joining element (22).

11. The magazine assembly according to one of claims 1 - 10, **characterized in that** the housing nests (46) and/or a plurality of conveyor nests (74) each have a plurality of radial locking tabs (84; 92), which are distributed around the periphery and which extend essentially axially.

12. The magazine assembly according to one of claims 1 - 11, **characterized in that** the housing nests (46) and/or a plurality of conveyor nests (74) each have a plurality of support bars (86; 94), which are distributed around the periphery and which extend essentially axially.

13. The magazine assembly according to claim 11 and according to claim 12, **characterized in that** the radial locking tabs (84; 92) are slotted in a longitudinal direction, wherein the support bars (86; 94) are each arranged in a longitudinal slot of a radial locking tab (84; 92).

14. The magazine assembly according to one of claims 11 - 13, **characterized in that** at least some of the radial locking tabs (84; 92) of the housing nests (46) and/or of the conveyor nests (74) have radially inward-protruding retaining lugs (98) on their axial ends.

15. The magazine assembly according to one of claims 1 - 14, **characterized in that** the dispensing housing nest (50) is hooked up to a compressed air connection (56).

16. A method for conveying joining elements (22) within a magazine assembly (30), in particular a magazine assembly (30) according to one of claims 1 - 15, wherein the joining elements (22) are accommodated within housing nests (46), which are arranged axially in sequence, of a housing (32) of the magazine assembly (30) such that they are axially spaced apart from one another, wherein the joining elements (22) are conveyed synchronously and in cycles while maintaining their axial separation distance from a first axial end (36) of the housing (32) toward an opposite second axial end (38) of the housing (32).

## Patentansprüche

1. Magazinanordnung (30) zur temporären Aufnahmen von Fügeelementen (22), mit
- einem eine Längsachse (34) definierenden Gehäuse (32), innerhalb dessen eine Mehrzahl von Fügeelementen (22) axial hintereinander aufnehmbar sind, und
- einer Fördereinrichtung (54), die dazu ausgebildet ist, Fügelemente (22) von einem ersten axialen Ende (36) des Gehäuses (32) zu einem entgegengesetzten zweiten axialen Ende (38) des Gehäuses zu fördern,
**dadurch gekennzeichnet, dass**
innerhalb des Gehäuses (32) eine Mehrzahl von Gehäusenestern (46) ausgebildet ist, die entlang der Längsachse (34) hintereinander angeordnet sind und die jeweils zur Aufnahme eines Fügeelementes (22) ausgebildet sind, wobei die Fördereinrichtung (54) dazu ausgebildet ist, ein einzelnes Fügeelement (22) oder mehrere Fügeelemente (22) taktweise von einem Zuführgehäusenest (48) an dem ersten axialen Ende (36) des Gehäuses (32) zu einem Abgabegehäusenest (50) an dem entgegengesetzten zweiten axialen Ende (38) des Gehäuses (32) zu fördern.

2. Magazinanordnung nach Anspruch 1, **dadurch gekennzeichnet, dass** die Gehäusenester (46) so ausgebildet sind, dass Fügeelemente (22) in axial benachbarten Gehäusenestern (46) voneinander beabstandet sind.

3. Magazinanordnung nach Anspruch 1 oder 2, **dadurch gekennzeichnet, dass** Fördereinrichtung (54) eine Mehrzahl von Fördernestern (74) aufweist, die entlang der Längsachse (34) hintereinander angeordnet sind, die jeweils zur Aufnahme eines Fügeelementes (22) ausgebildet sind und die gemeinsam in Längsrichtung zwischen einer ersten Axialposition (AP1) und einer zweiten Axialposition (AP2) verschiebbar sind, wobei die Fördernester (74) in der ersten Axialposition (AP1) mit einer ersten Gruppe von Gehäusenestern (46) axial ausgerichtet sind und wobei die Fördernester (74) in der zweiten Axialposition (AP2) mit einer zweiten Gruppe von Gehäusenestern (46) axial ausgerichtet sind, die um eine axiale Gehäusenestlänge (H) von der ersten Gruppe (46) versetzt ist..

4. Magazinanordnung nach einem der Ansprüche 1 bis 3, **dadurch gekennzeichnet, dass** die Gehäusenester (46) und/oder eine Mehrzahl von Fördernestern (74) jeweils eine Anzahl von über den Umfang des Gehäuses (32) verteilt angeordneten Nestsegmenten (80; 76) aufweisen.

5. Magazinanordnung nach Anspruch 4, **dadurch gekennzeichnet, dass** das Nestsegment (80) der Gehäusenester (46) und das Nestsegment (76) der Fördernester (74) identische Teile sind.

6. Magazinanordnung nach Anspruch 4 oder 5, **dadurch gekennzeichnet, dass** die Nestsegmente (76) der Förderernester (74) axial gekoppelt und mittels eines Förderantriebs (66) gemeinsam zwischen der ersten Axialpositon (AP1) und der zweiten Axialposition (AP2) versetzbar sind..

7. Magazinanordnung nach einem der Ansprüche 1 bis 6, **dadurch gekennzeichnet, dass** die Gehäusenester (46) und/oder eine Mehrzahl von Förderernestern (74) jeweils so ausgebildet sind, dass ein Fügeelement (22) darin verkippsicher gehalten ist..

8. Magazinanordnung nach einem der Ansprüche 1 bis 7, **dadurch gekennzeichnet, dass** die Fügeelemente (22) einen Flanschabschnitt (64) aufweisen, wobei die Gehäusenester (46) und/oder eine Mehrzahl von Fördernestern (74) jeweils eine an dem Flanschabschnitt (64) radial elastisch angreifende Klemmeinrichtung (84 ; 92) und/oder eine an einer Oberseite des Flanschabschnittes (64) angreifende Stützeinrichtung (86 ; 94) aufweisen.

9. Magazinanordnung nach einem der Ansprüche 1 bis 8, **dadurch gekennzeichnet, dass** ein Fördererantrieb (66) dazu ausgebildet ist, eine Mehrzahl von Fördernestern (74) relativ zu einer Mehrzahl von Gehäusenestern (46) zu bewegen.

10. Magazinanordnung nach Anspruch 9, **dadurch gekennzeichnet, dass** ein Hub (H) zwischen der ersten Axialposition (AP1) und der zweiten Axialposition (AP2) größer ist als eine axiale Länge (L) eines Fügeelementes (22).

11. Magazinanordnung nach einem der Ansprüche 1 bis 10, **dadurch gekennzeichnet, dass** die Gehäusenester (46) und/oder eine Mehrzahl von Fördernestern (74) jeweils eine Mehrzahl von über den Umfang verteilt angeordneten und sich im Wesentlichen axial erstreckenden Radialklemmzungen (84 ; 92) aufweisen.

12. Magazinanordnung nach einem der Ansprüche 1 bis 11, **dadurch gekennzeichnet, dass** die Gehäusenester (46) und/oder eine Mehrzahl von Fördernestern (74) jeweils eine Mehrzahl von über den Umfang verteilt angeordneten und sich im Wesentlichen axial erstreckenden Stützstäben (86 ; 94) aufweisen.

13. Magazinanordnung nach Anspruch 11 und nach Anspruch 12, **dadurch gekennzeichnet, dass** die Radialklemmzungen (84 ; 92) in Längsrichtung geschlitzt sind, wobei die Stützstäbe (86 ; 94) jeweils in einem Längsschlitz einer Radialklemmzunge (84 ; 92) angeordnet sind.

14. Magazinanordnung nach einem der Ansprüche 11 bis 13, **dadurch gekennzeichnet, dass** zumindest einige der Radialklemmzungen (84 ; 92) der Gehäusenester (46) und/oder der Fördernester (74) an ihren axialen Enden radial nach innen vorstehende Haltenasen (98) aufweisen.

15. Magazinanordnung nach einem der Ansprüche 1 bis 14, **dadurch gekennzeichnet, dass** das Abgabegehäusenest (50) mit einem Druckluftanschluss (56) verbunden ist.

16. Verfahren zum Fördern von Fügeelementen (22) innerhalb einer Magazinanordnung (30), insbesondere einer Magazinanordnung (30) nach einem der Ansprüche 1-15, wobei die Fügeelemente (22) innerhalb von axial hintereinander angeordneten Gehäusenestern (46) eines Gehäuses (32) der Magazinanordnung (30) axial beabstandet zueinander aufgenommen sind, wobei die Fügeelemente (22) synchron und unter Beibehaltung ihres axialen Abstandes taktweise von einem ersten axialen Ende (36) des Gehäuses (32) in Richtung hin zu einem entgegengesetzten zweiten axialen Ende (38) des Gehäuses (32) gefördert werden.

## Revendications

1. Ensemble magasin (30) pour recevoir temporairement des éléments d'assemblage (22) présentant
- un boîtier (32) définissant un axe longitudinal (34) à l'intérieur duquel une pluralité d'éléments d'assemblage (22) peuvent être logés de manière axiale en séquence, et
- un convoyeur (54), qui est configuré pour transporter des éléments d'assemblage (22) depuis une première extrémité axiale (36) du boîtier (32) jusqu'à une seconde extrémité axiale opposée (38) du boîtier,
**caractérisé en ce que**
une pluralité de logements de boîtier (46) sont formés à l'intérieur du boîtier (32), qui sont disposés en séquence le long de l'axe longitudinal (34) et qui sont chacun configurés pour recevoir un élément d'assemblage (22), dans lequel le transporteur (54) est configuré pour transporter un seul élément d'assemblage (22) ou plusieurs éléments d'assemblage (22) en cycles depuis un logement de boîtier d'alimentation (48) au niveau de la première extrémité axiale (36) du boîtier (32) jusqu'à un logement de boîtier de distribution (50) au niveau de la seconde extrémité axiale opposée (38) du boîtier (32).

2. Ensemble magasin selon la revendication 1, **caractérisé en ce que** les logements de boîtier (46) sont configurés de telle sorte que des éléments d'assemblage (22) soient espacés les uns des autres dans des logements de boîtier axialement adjacents (46).

3. Ensemble magasin selon la revendication 1 ou 2, **caractérisé en ce que** le convoyeur (54) présente une pluralité de logements de convoyeur (74), qui sont disposés en séquence le long de l'axe longitudinal (34), qui sont chacun configurés pour recevoir un élément d'assemblage (22) et qui peuvent être déplacés conjointement dans une direction longitudinale entre une première position axiale (AP1) et une seconde position axiale (AP2), dans lequel les logements de convoyeur (74), dans la première position axiale (AP1), sont alignés axialement sur un premier groupe de logements de boîtier (46) et dans lequel les logements de convoyeur (74), dans la seconde position axiale (AP2), sont alignés axialement sur un second groupe de logements de boîtier (46), qui sont décalés du premier groupe (46) par une longueur de logement de boîtier axiale (H).

4. Ensemble magasin selon l'une des revendications 1 à 3, **caractérisé en ce que** les logements de boîtier (46) et/ou une pluralité de logements de convoyeur (74) présentent chacun un certain nombre de segments de logement (80 ; 76) répartis autour de la périphérie du boîtier (32).

5. Ensemble magasin selon la revendication 4, **caractérisé en ce que** le segment de logement (80) du logement de boîtier (46) et le segment de logement (76) du logement de convoyeur (74) sont des pièces identiques.

6. Ensemble magasin selon la revendication 4 ou 5, **caractérisé en ce que** les segments de logement (76) des logements de convoyeur (74) sont couplés axialement et peuvent être déplacés conjointement entre la première position axiale (AP1) et la seconde position axiale (AP2) au moyen d'un entraînement de convoyeur (66).

7. Ensemble magasin selon l'une des revendications 1 à 6, **caractérisé en ce que** les logements de boîtier (46) et/ou une pluralité de logements de convoyeur (74) sont chacun configurés de telle sorte qu'un élément d'assemblage (22) soit tenu à l'intérieur de celui-ci de manière à résister à un basculement.

8. Ensemble magasin selon l'une des revendications 1 à 7, **caractérisé en ce que** les éléments d'assemblage (22) présentent une section de bride (64), dans lequel les logements de boîtier (46) et/ou une pluralité de logements de convoyeur (74) présentent chacun un mécanisme de verrouillage (84 ; 92) qui vient en prise de manière radialement élastique sur la section de bride (64) et/ou un mécanisme de support (86 ; 94) qui vient en prise sur un côté supérieur de la section de bride (64).

9. Ensemble magasin selon l'une des revendications 1 à 8, **caractérisé en ce qu'**un entraînement de convoyeur (66) est configuré pour déplacer une pluralité de logements de convoyeur (74) par rapport à une pluralité de logements de boîtier (46).

10. Ensemble magasin selon la revendication 9, **caractérisé en ce qu'**une distance de déplacement (H) entre la première position axiale (AP1) et la seconde position axiale (AP2) est plus importante qu'une longueur axiale (L) d'un élément d'assemblage (22).

11. Ensemble magasin selon l'une des revendications 1 à 10, **caractérisé en ce que** les logements de boîtier (46) et/ou une pluralité de logements de convoyeur (74) présentent chacun une pluralité de languettes de verrouillage radiales (84 ; 92), qui sont réparties autour de la périphérie et qui s'étendent sensiblement axialement.

12. Ensemble magasin selon l'une des revendications 1 à 11, **caractérisé en ce que** les logements de boîtier (46) et/ou une pluralité de logements de convoyeur (74) présentent chacun une pluralité de barres de support (86 ; 94), qui sont réparties autour de la périphérie et qui s'étendent sensiblement axialement.

13. Ensemble magasin selon la revendication 11 et selon la revendication 12, **caractérisé en ce que** les languettes de verrouillage radiales (84 ; 92) sont inclinées dans une direction longitudinale, dans lequel les barres de support (86 ; 94) sont chacune agencées dans une fente longitudinale d'une languette de verrouillage radiale (84 ; 92).

14. Ensemble magasin selon l'une des revendications 11 à 13, **caractérisé en ce qu'**au moins quelques-unes des languettes de verrouillage radiales (84 ; 92) des logements de boîtier (46) et/ou des logements de convoyeur (74) présentent des pattes de maintien faisant saillie radialement vers l'intérieur (98) sur leurs extrémités axiales.

15. Ensemble magasin selon l'une des revendications 1 à 14, **caractérisé en ce que** le logement de boîtier de distribution (50) est accroché à une connexion d'air comprimé (56).

16. Procédé pour transporter des éléments d'assemblage (22) à l'intérieur d'un ensemble magasin (30), en particulier un ensemble magasin (30) selon l'une des revendications 1 à 15, dans lequel les éléments d'assemblage (22) sont logés à l'intérieur de logements de boîtier (46), qui sont disposés axialement en séquence, d'un boîtier (32) de l'ensemble magasin (30) de telle sorte qu'ils soient espacés les uns des autres, dans lequel les éléments d'assemblage (22) sont transportés de manière synchrone et en cycles tout en gardant leur distance de séparation axiale depuis une première extrémité axiale (36) du boîtier (32) vers une seconde extrémité axiale opposée (38) du boîtier (32).
